# EUROPÄISCHE PATENTANMELDUNG

(11) **EP 4 793 535 A1**
(43) Veröffentlichungstag der Anmeldung: **19.08.2026**
(21) Anmeldenummer: 26158806.5
(22) Anmeldetag: 16.02.2026
(51) Int. Cl.: F16M 11/28, F16M 11/38, E01F 9/662

(54) **MOBILER GERÄTETRÄGER**

(30) Priorität: 17.02.2025 DE 102025105915
(71) Anmelder: Saferoad Traffic GmbH, 66620 Nonnweiler (DE)
(72) Erfinder: Diehl, Stephan, 55768 Hoppstädten-Weiersbach (DE)
(74) Vertreter: Mötsch, Andreas

(57) **Zusammenfassung**

Die vorliegende Erfindung betrifft einen mobilen Geräteträger (10) zum Positionieren und Tragen einer Einrichtung, insbesondere einer Geräteanordnung (20) zur Erfassung von Verkehrsinformationen an Verkehrswegen. Der mobile Geräteträger (10) hat eine Trageinheit (30), die ein- und ausfahrbar ist und dazu eingerichtet ist, eine Einrichtung zu tragen, und einen Fußkörper (40) zum Aufstellen des mobilen Geräteträgers (10) auf einem Untergrund. Die Trageinheit (30) ist schwenkbar mit dem Fußkörper (40) verbunden. Die Trageinheit (30) ist zwischen einer im Wesentlichen horizontalen Ausfahrstellung zum Ausfahren der Trageinheit (30) und einer vertikalen Funktionsstellung relativ zu dem Fußkörper (40) um eine Schwenkachse (S) schwenkbar, die schräg oder quer zu der Längsachse (L) der Trageinheit (30) verläuft.

## Beschreibung

Die vorliegende Erfindung betrifft einen mobilen Geräteträger zum Positionieren und Tragen einer Einrichtung.

Ein Geräteträger dient zum stabilen Tragen von Einrichtungen. Je nach Einrichtung ist deren Position und Orientierung geeignet einzustellen, um sie betreiben zu können. Ein Geräteträger sollte also eine einfache Justierung der getragenen Einrichtung ermöglichen.

Solche Geräteträger werden häufig in der Verkehrsüberwachung oder Sicherheitsüberwachung eingesetzt. Hierbei werden sie insbesondere für temporäre Zwecke, wie beispielsweise für eine Verkehrs- oder Sicherheitsüberwachung von Baustellen, verwendet, wofür insbesondere mobile Geräteträger geeignet sind.

Es ist eine Aufgabe der vorliegenden Erfindung einen mobilen Geräteträger bereitzustellen, der einfach transportierbar und an einem Einsatzort mit wenig Zeit- und Personalaufwand installiert werden kann.

Diese Aufgabe wird mit einem mobilen Geräteträger gelöst, der die Merkmale des Anspruchs 1 aufweist. Diese Aufgabe wird ferner mit einem Montageverfahren gelöst, das die Merkmale des Anspruchs 16 aufweist.

Der erfindungsgemäße mobile Geräteträger zum Positionieren und Tragen einer Einrichtung umfasst eine ein- und ausfahrbare Trageinheit, die dazu eingerichtet ist, die Einrichtung zu tragen, und einen Fußkörper zum Aufstellen des mobilen Geräteträgers auf einem Untergrund.

Die Trageinheit ist schwenkbar mit dem Fußkörper verbunden. Die Trageinheit ist zumindest zwischen einer im Wesentlichen horizontalen Ausfahrstellung zum Ausfahren der Trageinheit und einer vertikalen Funktionsstellung relativ zu dem Fußkörper um eine Schwenkachse schwenkbar, die schräg oder quer zur Längsachse der Trageinheit verläuft.

Der erfindungsgemäße mobile Geräteträger ermöglicht durch das Verschwenken zwischen Ausfahr- und Funktionsstellung eine einfache Installation an einem Einsatzort. In der Ausfahrstellung kann die Trageinheit eine Position oder Stellung einnehmen, in der die Trageinheit einfach ausgefahren bzw. ausgezogen werden kann. Im ausgefahrenen Zustand kann die Trageinheit anschließend in die Funktionsstellung geschwenkt werden. Beispielsweise kann sich die Trageinheit in der Ausfahrstellung horizontal erstrecken und in horizontaler Richtung ausgefahren werden. Die Trageinheit kann im ausgefahrenen Zustand anschließend in die Funktionsstellung geschwenkt werden, in der sich die Trageinheit mit ihrer Längsachse vertikal erstreckt. In der vertikalen Position der ausgefahrenen Trageinheit wird die Einrichtung in die erhöhte Position gebracht, um beispielsweise Verkehrsinformationen zu erfassen. Insgesamt kann der mobile Geräteträger im eingefahrenen Zustand der Trageinheit als kompakte Einheit transportiert und an dem Einsatzort mit wenig Zeitaufwand installiert werden.

Der mobile Geräteträger kann zum Positionieren und Tragen einer Geräteanordnung zur Erfassung von Verkehrsinflation an Verkehrswegen geeignet sein. Der mobile Geräteträger kann die Geräteanordnung umfassen. Die Geräteanordnung kann dazu eingerichtet sein, Verkehrsinformationen zu erfassen. Die Trageinheit kann die Geräteanordnung tragen.

Die Geräteanordnung kann verschiedenste Geräte zum Erfassen von Verkehrsinformationen aufweisen. Beispielsweise kann die Geräteanordnung eine oder mehrere Kameras zur Überwachung des Verkehrs aufweisen. Mittels durch Kameras erfasste Bilder kann der Verkehr erfasst werden, so dass eine Analyse von Staus, Unfällen oder Verkehrsverstößen erfolgen kann. Ferner können Kameras genutzt werden, um Kennzeichen für Mautkontrollen oder Verkehrsverstöße zu erfassen. Zudem können Kameras genutzt werden, um einen Fahrbahnzustand zu erkennen. So kann beispielsweise erkannt werden, ob die Fahrbahn trocken, nass oder vereist ist.

Alternative oder zusätzlich dazu kann die Geräteanordnung auch zur Erfassung der Geschwindigkeit von Fahrzeugen eingerichtet sein. Die Geräteanordnung kann Radarsensoren und/oder Lidar-Sensoren aufweisen, um Fahrzeugbewegungen präzise zu erfassen. Die Geräteanordnung kann auch eines oder mehrere Geräte zum Erfassen von Wetterinformationen aufweisen. Beispielsweise kann die Geräteanordnung einen Windmesser, ein Thermometer, einen Umgebungsdrucksensor und/oder eine Niederschlagsensor aufweisen.

Die Länge der Trageinheit kann entlang ihrer Längsachse veränderbar sein. Die Trageinheit kann linear ein- und ausziehbar sein. Die Trageinheit kann teleskopartig aus- und einfahrbar sein. Die Trageinheit kann also aus mehreren ineinander geschobenen Segmenten gebildet sein, die bei Bedarf auseinandergeschoben werden. Die Trageinheit kann ein erstes Segment umfassen, das in seinem Inneren ein zweites Segment ein- und ausfahrbar aufnimmt. Die Trageinheit kann zusätzlich ein drittes Segment aufweisen, das ein- und ausfahrbar im Inneren des zweiten Segments aufgenommen ist. Die Trageinheit kann ferner ein viertes Segment aufweisen, das ein- und ausfahrbar im Inneren des dritten Segments aufgenommen ist. Die Segmente können aus Rohren mit beliebiger Rohrgeometrie gebildet sein. Die Segmente können beispielsweise aus Rundrohren oder Vierkantrohren gebildet sein. Die Trageinheit kann ein teleskopierbarer Mast sein.

Die Trageinheit kann ein Teleskopmast sein. Eine solche teleskopartige Konstruktion bietet eine platzsparende Trageinheit und erlaubt einen besonders kompakten Aufbau des mobilen Geräteträgers. Die Trageinheit kann eine Rollschubführung zum Ein- und Ausfahren aufweisen. Die Trageinheit kann stufenlos ausfahrbar sein. Ein stufenloses Ausfahren ermöglicht eine anpassbare Länge und somit eine flexible Positionierung der Geräteanordnung. Hierbei kann insbesondere eine Höhe der Geräteanordnung in der Funktionsstellung geeignet angepasst werden. Die Trageinheit kann an ihrem einen Ende die Geräteanordnung tragen und an dem anderen, dazu entgegengesetzten Ende von dem Fußkörper getragen sein.

Der Fußkörper kann einen Aufnahmeraum zur Aufnahme eines Beschwerungselements aufweisen. Dies verbessert einen sicheren Stand des mobilen Geräteträgers auf einem Untergrund. Durch die Aufnahme des Beschwerungselements in den Aufnahmeraum kann das Beschwerungselement getrennt von der weiteren Struktur des Fußkörpers hergestellt werden. Die Herstellung wird damit effizienter. Alternativ oder zusätzlich dazu kann der Fußkörper des mobilen Geräteträgers zumindest einen Sockel aufweisen. Der zumindest eine Sockel kann aus Betonstahl gebildet sein. Insbesondere kann der zumindest eine Sockel als Betonstahlflachfundament gebildet sein. Die Form und die Abmessungen des Fußkörpers können je nach Einsatzgebiet variieren. Soll der mobile Geräteträger am Fahrbahnrand oder zwischen zwei Schutzplanken eingesetzt werden, ist eine Quaderform des Fußkörpers zu bevorzugen. Der Fußkörper kann verschiede Formen aufweisen, solange diese einen stabilen Stand des mobilen Geräteträgers sicherstellt.

Der mobile Geräteträger kann vormontiert sein. Der mobile Geräteträger kann in der Ausfahrstellung sämtliche Bauteile und Einheiten aufweisen, die für einen Betrieb am Einsatzort benötigt werden. Die Installation das mobilen Geräteträgers kann ohne ein Anbringen weiterer Bauteile lediglich durch Schwenk- und Ziehbewegungen installiert werden. Am Einsatzort muss der mobile Geräteträger nur in der Ausfahrstellung ausgefahren werden, um ihn anschließend in die Funktionsstellung zu schwenken.

Die Trageinheit kann ferner zwischen einer Transportstellung zum Transportieren des mobilen Geräteträgers und der Ausfahrstellung relativ zu dem Fußkörper um die Schwenkachse schwenkbar sein. Die Transportstellung ermöglicht im Vergleich zu der Ausfahrstellung einen einfacheren Transport. Die Trageinheit kann sich in der Transportstellung vertikal erstrecken, sodass die Trageinheit in der Transportstellung seitlich nicht über den Fußkörper vorsteht. Es ist in der Transportstellung problemlos möglich mehrere mobile Geräteträger nebeneinander auf einem Lastkraftwagen zu transportieren, ohne dass es zu Schäden an der Trageinheit kommt.

Bereits in der Transportstellung kann der mobile Geräteträger sämtliche Bauteile und Einheiten aufweisen, die für einen Betrieb am Einsatzort benötigt werden. Der mobile Geräteträger kann beispielsweise als Ganzes mit einem Kran von einem Lastkraftwagen abgeladen werden. Nach dem Abstellen des Fußkörpers auf einen Untergrund kann der mobile Geräteträger ohne Anbringen weiterer Bauteile durch Schwenk- und Ziehbewegungen installiert werden. Am Einsatzort muss der mobile Geräteträger lediglich von der Transportstellung in die Ausfahrstellung geschwenkt werden, in der Ausfahrstellung ausgefahren werden und anschließend in die Funktionsstellung geschwenkt werden.

Vorzugsweise weist der Fußkörper eine Schwenkeinrichtung zum Schwenken der Trageinheit um die Schwenkachse auf. Die Schwenkeinrichtung kann dazu ausgebildet sein, die Trageinheit in der Transportstellung und in der Funktionsstellung zu arretieren. Beim Transport des mobilen Geräteträgers und im Betrieb der Geräteanordnung ist es vorteilhaft eine Schwenkbewegung um die Schwenkachse zu blockieren. Durch die Arretierung werden unerwünschte Bewegungen beim Transport und beim Betrieb in der Funktionsstellung der Geräteanordnung vermieden
Die Schwenkeinrichtung kann einen ersten Tragrahmen, an dem die Trageinheit befestigt ist, einen zweiten Tragrahmen, der an dem Fußkörper befestigt ist, und eine Welle aufweisen, die den ersten Tragrahmen und den zweiten Tragrahmen um die Schwenkachse schwenkbar verbindet. Der erste Tragrahmen und der zweite Tragrahmen können jeweils zumindest ein Durchgangsloch aufweisen, durch das sich die Welle erstreckt, um die Schwenkachse zu definieren.

Der erste Tragrahmen und/oder der zweite Tragrahmen können durch eine quaderförmigen Rahmenstruktur gebildet sein. Bei einer solchen quaderförmigen Rahmenstruktur können insbesondere deren Kanten durch miteinander verbundene stabförmige Strukturelemente gebildet sein. Dabei können insbesondere die Flächen des quaderförmigen Rahmens offen bleiben. Die miteinander verbundenen, stabförmigen Strukturelemente können beispielsweise miteinander verschweißt sein.

Die Trageinheit kann durch ein erstes Befestigungsmittel an dem ersten Tragrahmen befestigt sein. Das erste Befestigungsmittel kann die Trageinheit umschließen und mit dem ersten Tragrahmen verschraubt sein. Das erste Befestigungsmittel kann durch eine oder mehrere Schellen gebildet sein. Vorzugsweise wird die Trageinheit an zumindest zwei voneinander beabstandeten Befestigungsstellen an dem ersten Tragrahmen befestigt. Durch die beabstandete Befestigung können an der Trageinheit wirkende Kräfte aufgenommen werden. Insbesondere im ausgefahrenen Zustand können beispielsweise durch die Windlast hohe Kräfte und hohe Momente wirken, die der erste Tragrahmen aufnehmen muss.

Die Trageinheit kann in der Funktionsstellung und/oder in der Transportstellung durch ein zweites Befestigungsmittel an dem zweiten Tragrahmen lösbar befestigt sein. Das zweite Befestigungsmittel kann zur Arretierung der Trageinheit in der Funktionsstellung dienen. Das zweite Befestigungsmittel kann die Trageinheit umschließen und mit dem zweiten Tragrahmen verschraubt sein. Das zweite Befestigungsmittel kann durch eine oder mehrere Schellen gebildet sein.

Der zweite Tragrahmen ist vorzugsweise an zumindest zwei voneinander beanstandeten Befestigungsstellen an dem Fußkörper befestigt. Der zweite Tragrahmen kann auf dem Fußkörper aufliegen.

Vorzugsweise liegt der erste Tragrahmen in der Transportstellung auf dem zweiten Tragrahmen auf. Alternativ oder zusätzlich dazu kann der erste Tragrahmen vorzugsweise in der Funktionsstellung auf dem zweiten Tragrahmen aufliegen. Durch das Aufliegen des ersten Tragrahmens auf dem zweiten Tragrahmen können in der Funktionsstellung und/oder in der Transportstellung auf die Trageinheit wirkende Kräfte einfach von dem ersten Tragrahmen aufgenommen und auf dem zweiten Tragrahmen abgestützt werden. Alternativ oder zusätzlich dazu kann der erste Tragrahmen in der Ausfahrstellung auf dem zweiten Tragrahmen aufliegen. Durch das Aufliegen des ersten Tragrahmens in der Ausfahrstellung wird die Trageinheit beim Ausfahren der Trageinheit in Position gehalten und somit ein Ausfahren vereinfacht.

Bevorzugt hat der erste Tragrahmen eine kleinere Abmessung als der zweite Tragrahmen. Insbesondere kann der erste Tragrahmen zumindest teilweise innerhalb des zweiten Tragrahmens angeordnet sein. Der zweite Tragrahmen kann ein nach innen versetztes erstes Strukturelement aufweisen, auf dem der erste Tragrahmen in der Funktionsstellung und/oder oder der Transportstellung aufliegen kann. Alternativ oder zusätzlich dazu kann der zweite Tragrahmen ein nach innen versetztes zweites Strukturelement aufweisen, auf dem der erste Tragrahmen in der Ausfahrstellung aufliegt.

Der erste Tragrahmen und der zweite Tragrahmen können Arretierlöcher aufweisen, durch die ein Arretierbolzen zur Arretierung der Trageinheit in der Funktionsstellung und/oder in der Transportstellung einführbar ist. Der erste Tragrahmen und der zweite Tragrahmen können weitere Arretierlöcher aufweisen, durch die der Arretierbolzen zur Arretierung der Trageinheit in der Ausfahrstellung einführbar ist. Die Schwenkeinrichtung kann ferner den Arretierbolzen umfassen. Der erste Tragrahmen kann ein erstes Arretierloch zur Arretierung in der Transportstellung und/oder der Funktionsstellung aufweisen. Der erste Tragrahmen kann ein zweites Arretierloch zur Arretierung in der Ausfahrstellung aufweisen. Das erste Arretierloch und/oder das zweite Arretierloch können sich parallel zu der Welle bzw. der Schwenkachse erstrecken. Der zweite Tragrahmen kann ein drittes Arretierloch zur Arretierung in der Transportstellung und/oder der Funktionsstellung aufweisen. Der zweite Tragrahmen kann ein viertes Arretierloch zur Arretierung in der Ausfahrstellung aufweisen. Das dritte Arretierloch und/oder das vierte Arretierloch können sich parallel zu der Welle bzw. der Schwenkachse erstrecken. Der Arretierbolzen kann in das erste Arretierloch des ersten Tragrahmens und das dritte Arretierloch des zweiten Tragrahmens eingeführt werden, um die Trageinheit in der Transportstellung und/oder der Funktionsstellung zu arretieren. Ebenso kann der Arretierbolzen in das zweite Arretierloch des ersten Tragrahmens und das vierte Arretierloch des zweiten Tragrahmens eingeführt werden, um die Trageinheit in der Ausfahrstellung zu arretieren. Der Arretierbolzen kann einen Griff zum Einführen in die Arretierlöcher und zum Ausführen aus den Arretierlöchern aufweisen.

Vorzugsweise weist der erste Tragrahmen ein Verbindungselement zum Heben des mobilen Geräteträgers in der Transportstellung auf. Das Verbindungselement soll ein Anheben des mobilen Geräteträger beispielsweise mit einem Kran oder einem Gabelstapler ermöglichen. Dies vereinfacht den Transport des mobilen Geräteträgers weiter. Durch die Anordnung des Verbindungselement an dem ersten Tragrahmen kann der mobile Geräteträger ferner beim Aufstellen auf einen Untergrund einfacher positioniert werden. Das Verbindungselement kann beispielsweise durch eine Transportöse ausgebildet sein. Die Transportöse kann in dem ersten Tragrahmen eingeschraubt sein. Die Transportöse kann beispielsweise eine Kranöse zum Anheben des mobilen Geräteträgers mit einem Kran umfassen. Der mobile Geräteträger kann also kranbar ausgebildet sein. Alternativ oder zusätzlich dazu kann der Fußkörper dazu eingerichtet sein, Gabelzinken eines Gabelstaplers aufzunehmen. Der Fußkörper kann also Aussparungen aufweisen, durch die Gabelzinken zum Anheben des mobilen Geräteträger einführbar sind.

Der mobile Geräteträger kann ein Energiegewinnungsmodul aufweisen. Das Energiegewinnungsmodul kann beispielsweise die Geräteanordnung mit Energie versorgen. Der mobile Geräteträger kann somit autark betrieben werden. Das Energiegewinnungsmodul kann an der Trageinheit angeordnet werden und relativ zur Trageinheit ausrichtbar sein. Hierdurch kann das Energiegewinnungsmodul so ausgerichtet werden, dass dies günstig für eine Energiegewinnung ist. Das Energiegewinnungsmodul kann in einer Ausführungsform ein Solarmodul sein, das bei Sonneneinstrahlung Sonnenenergie in elektrische Energie umwandelt. Das Energiegewinnungsmodul kann auch mehrere Solarmodule aufweisen. Die Ausrichtung des Energiegewinnungsmoduls kann manuell und/oder ferngesteuert erfolgen. Die Ausrichtung des Energiegewinnungsmoduls kann unabhängig von der Ausrichtung der Trageinheit erfolgen. Insbesondere kann das Energiegewinnungsmodul eine Nachführvorrichtung aufweisen, die dazu eingerichtet ist, das Energiegewinnungsmodul automatisch nach dem Sonnenstand auszurichten. Die Nachführvorrichtung kann den Neigungswinkel und/oder die Himmelsrichtung des wenigstens einen Energiegewinnungsmoduls verändern.

Das wenigstens eine Solarmodule kann satteldachförmig oder plan an der Trageinheit angeordnet sein. Die satteldachförmige Anordnung bietet die Möglichkeit einer Ost-West-Ausrichtung, wodurch eine gleichmäßige Energiegewinnung über den Tag ermöglicht wird.

Der mobile Geräteträger weist vorzugsweise einen Energiespeicher auf. Ein solcher Energiespeicher kann modular aufgebaut sein. Der Energiespeicher kann teilweise innerhalb des zweiten Tragrahmens angeordnet sein. Hierdurch kann der Stand des mobilen Geräteträgers mithilfe des Gewichts des Energiespeichers weiter verbessert werden. Der Energiespeicher kann beispielsweise eine oder mehrere Batterien und/oder einen Kraftstofftank aufweisen. Der Energiespeicher kann der Geräteanordnung Energie zur Verfügung stellen. Ferner kann der Energiespeicher von dem Energiegewinnungsmodul gewonnene Energie zwischenspeichern, bevor diese von der Geräteanordnung benötigt wird. Die Geräteanordnung kann direkt mit Strom aus dem Energiespeicher oder mit Strom, der beispielsweise über Methanol-Verstromung in einer Brennstoffzelle bereitgestellt wird, versorgt werden. Der Energiespeicher weist vorzugsweise ein Gehäuse auf, in dem ein Energiespeichermedium und Steuerkomponenten aufgenommen sind.

Die Trageinheit weist vorzugsweise einen Hohlraum entlang ihrer Längsachse zur Aufnahme einer Verkabelung der Einrichtung, insbesondere der Geräteanordnung, auf. Eine solche Verkabelung kann beispielsweise ein Stromkabel und/oder Datenkabel umfassen. Durch die Verlegung der Verkabelung im Inneren der Trageinheit ist diese vor äußeren Einflüssen, wie beispielsweise Einflüssen durch Witterung, geschützt. Die Verkabelung kann insbesondere in der Transportstellung, in der Ausfahrstellung und in der Funktionsstellung vorhanden sein. Damit ist der mobile Geräteträger, sobald dieser in die Funktionsstellung gebracht ist, betriebsbereit. Zur Installation des mobilen Geräteträgers ist also keine Verkabelung nötig. Zusätzlich oder alternativ dazu können an einer Außenfläche der Trageinheit Kabelkanäle angebracht sein, durch die eine Verkabelung verlegt wird. Je nach Einsatzgebiet kann die Verkabelung auch ohne Kabelkanal frei entlang der Trageinheit verlaufen.

Die Trageinheit kann in der Ausfahrstellung händisch aus- und einfahrbar sein. Der mobile Geräteträger kann von einem einzelnen Monteur aufgestellt werden. Der Monteur schwenkt die Trageinheit in die Ausfahrstellung und zieht die Trageinheit ohne weitere technische Mittel auseinander. Im ausgezogenen Zustand der Trageinheit kann der Monteur die Trageinheit in die Funktionsstellung schwenken und der mobile Geräteträger befindet sich im Betriebszustand. Eine solche Installation kann mit besonders geringem Zeitaufwand und mit wenig Personaleinsatz und zudem ohne weitere technische Mittel erfolgen. Alternativ dazu kann die Trageinheit durch technische Mittel aus- und einfahrbar ausgebildet sein. Dies hat den Vorteil, dass die Installation durch geringeren Kraftaufwand eines Monteurs erfolgen kann.

Der mobile Geräteträger kann eine Steuereinrichtung aufweisen. Die Steuereinrichtung kann mit der Geräteanordnung verbunden sein und dazu eingerichtet sein, Informationen von der Geräteanordnung zu erhalten. Die Steuereinrichtung kann eine Kommunikationseinheit aufweisen, die mit einer externen Einrichtung kommunizieren kann. Die externe Einrichtung kann beispielsweise ein Smartphone eines Monteurs oder Bedieners oder ein Computer in einer Leitstelle sein. Über die Kommunikationseinheit können Informationen, die von der Geräteanordnung erfasst werden, an externe Einrichtungen übermittelt werden. Zusätzlich oder alternativ dazu kann die Steuereinrichtung dazu eingerichtet sein, die Geräteanordnung zu steuern. Ferner kann die Steuereinrichtung dazu eingerichtet sein, die Geräteanordnung basierend auf Steuerbefehlen, die die Kommunikationseinheit von einer externen Einrichtung empfängt, zu steuern.

Die Geräteanordnung selbst kann eine Kommunikationseinheit aufweisen, die die erfassten Daten und Informationen an eine Leitstelle, einen Bediener oder einen Monteur schicken kann.

Das erfindungsgemäße Montageverfahren für den mobilen Geräteträger umfasst ein Ausfahren der Trageinheit in der im Wesentlichen horizontalen Ausfahrstellung und ein Schwenken der Trageinheit um die Schwenkachse in die vertikale Funktionsstellung.

Die Erfindung wird im Folgenden beispielhaft anhand von Ausführungsformen mit Bezug auf die beiliegenden Figuren erläutert. Es stellen dar:
- Fig.1: eine perspektivische Ansicht eines mobilen Geräteträgers mit einer Trageinheit in einer Transportstellung,
- Fig. 2: eine perspektivische Ansicht des mobilen Geräteträgers mit der Trageinheit in einer Ausfahrstellung in einem eingefahrenen Zustand,
- Fig. 3: eine perspektivische Ansicht des mobilen Geräteträgers mit der Trageinheit in einer Ausfahrstellung in einem ausgefahrenen Zustand,
- Fig. 4: eine perspektivische Ansicht des mobilen Geräteträgers mit der Trageinheit in einer Funktionsstellung.
- Fig. 5: eine Seitenansicht des mobilen Geräteträgers mit der Trageinheit in der Transportstellung,
- Fig. 6: eine Seitenansicht des mobilen Geräteträgers mit der Trageinheit in der Ausfahrstellung in dem eingefahrenen Zustand,
- Fig. 7: eine Seitenansicht des mobilen Geräteträgers mit der Trageinheit in der Ausfahrstellung in dem ausgefahrenen Zustand, und
- Fig. 8: eine Seitenansicht des mobilen Geräteträgers mit der Trageinheit in der Funktionsstellung.

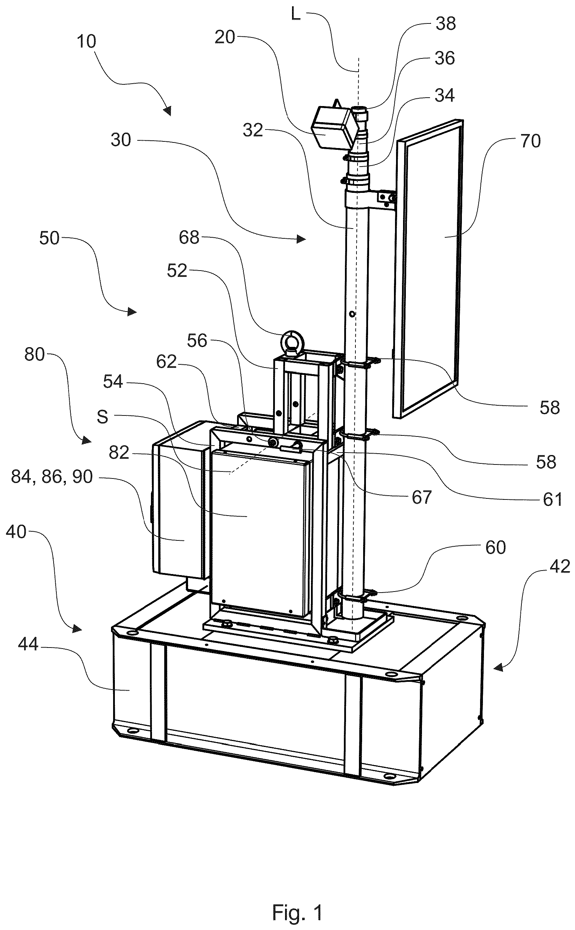

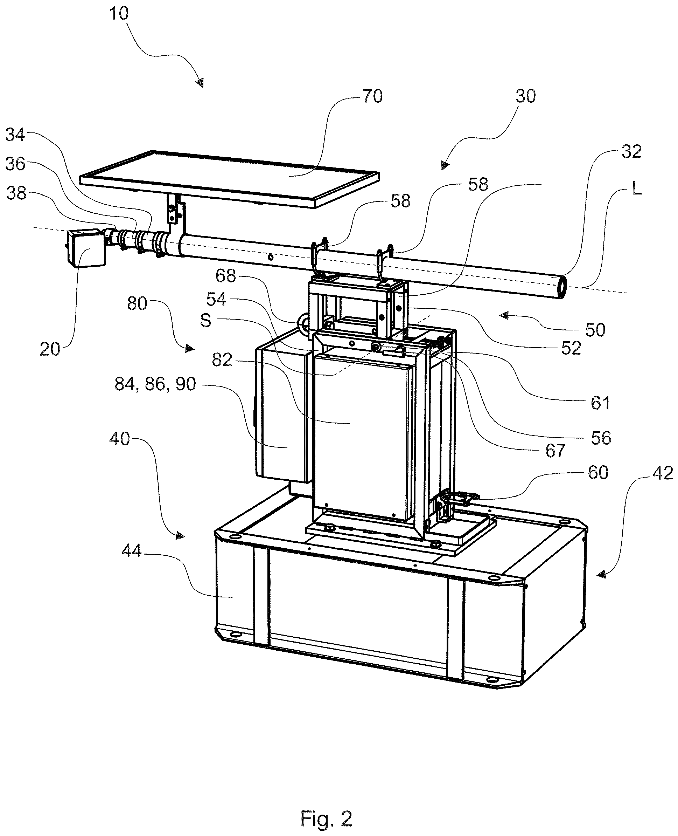

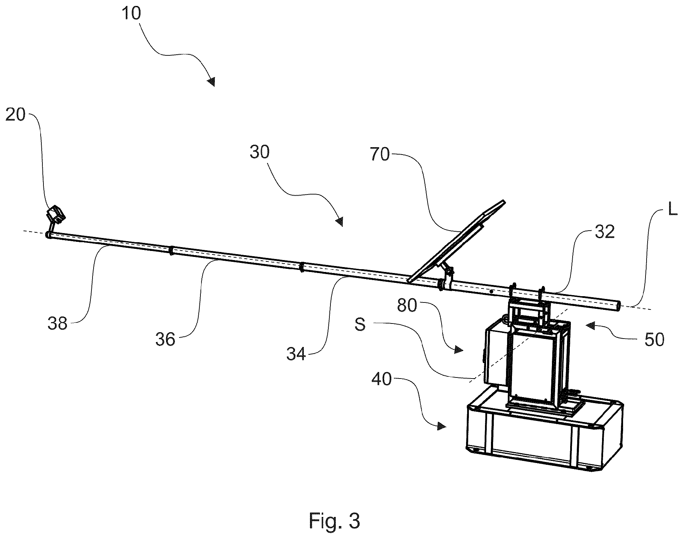

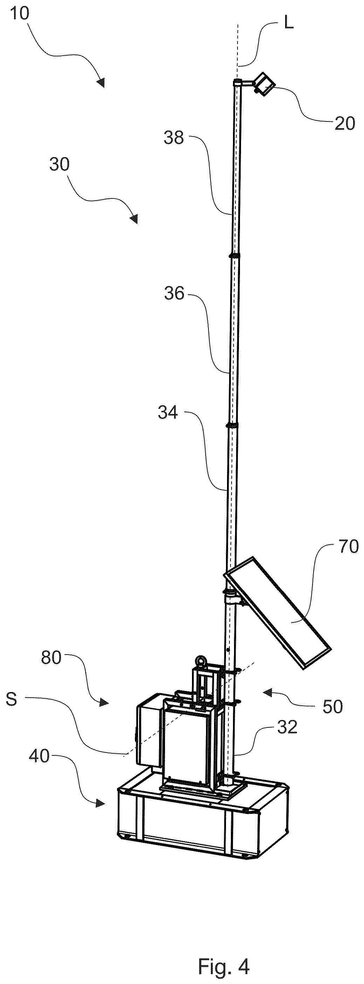

Die Figuren 1 bis 4 zeigen perspektivische Ansichten eines erfindungsgemäßen mobilen Geräteträgers 10 in unterschiedlichen Aufbaustadien. Figur 1 zeigt den mobilen Geräteträger 10 mit einer Trageinheit 30 in einer Transportstellung. Figur 2 zeigt den mobilen Geräteträger 10 mit der Trageinheit 30 in einer Ausfahrstellung in einem eingefahrenen Zustand. Figur 3 zeigt den mobilen Geräteträger 10 mit der Trageinheit 30 in der Ausfahrstellung in einem ausgefahrenen Zustand. Figur 4 zeigt den mobilen Geräteträger 10 mit der Trageinheit 30 in einer Funktionsstellung.

Figur 1 zeigt eine erfindungsgemäße Ausführungsform des mobilen Geräteträgers 10 zum Positionieren und Tragen einer Einrichtung. Der mobile Geräteträger 10 umfasst eine Trageinheit 30, die ein- und ausfahrbar ist und eine Einrichtung tragen kann, und einen Fußkörper 40 zum Aufstellen des mobilen Geräteträgers 10 auf einem Untergrund. Der mobile Geräteträger 10 umfasst als Einrichtung eine Geräteanordnung 20, die Verkehrsinformationen erfassen kann, wobei die Trageinheit 30 die Geräteanordnung 20 trägt.

Die Trageinheit 30 ist schwenkbar mit dem Fußkörper 40 verbunden. Die Trageinheit 30 ist zwischen der Ausfahrstellung zum Ausfahren der Trageinheit 30 und der Funktionsstellung relativ zu dem Fußkörper um eine Schwenkachse S schwenkbar, die schräg oder quer zur Längsachse L der Trageinheit 30 verläuft.

Die Geräteanordnung 20 kann verschiedenste Geräte zum Erfassen von Verkehrsinformationen aufweisen. In der vorliegenden Ausführungsform ist die Geräteanordnung 20 durch ein Geschwindigkeitssensor zur Erfassung der Geschwindigkeiten von vorbeifahrenden Fahrzeugen zu erfassen. Die Geräteanordnung kann aber auch eine Kamera umfassen. Mittels der von der Kamera erfassten Bilder kann der Verkehr zur Analyse von Staus, Unfällen oder Verkehrsverstößen erfasst werden. Ferner kann die Kamera genutzt werden, um einen Fahrbahnzustand zu erkennen. Anstatt der Kamera oder zusätzlich dazu kann die Geräteanordnung 20 verschiedenste Geräte aufweisen.

Die Länge der Trageinheit 30 kann entlang ihrer Längsachse L veränderbar sein. Die veränderbare Länge der Trageinheit 30 kann zwischen der in Figur 1 dargestellten Länge und der in Figur 3 dargestellten Länge verändert werden. Die Trageinheit 30 kann linear ausgezogen und wieder linear eingezogen werden. Das Ein- und Ausziehen der Trageinheit 30 erfolgt teleskopartig.

Die Trageinheit 30 ist gemäß der gezeigten Ausführungsform ein teleskopierbarer Mast. Die Trageinheit 30 umfasst mehrere ineinander geschobenen Segmente 32, 34, 36, 38, die beim Ausziehen auseinandergeschoben werden. Die Trageinheit 30 umfasst ein erstes Segment 32, dass in seinem Inneren ein zweites Segment 34 ein- und ausfahrbar aufnimmt. Die Trageinheit 30 umfasst zusätzlich ein drittes Segment 36, das ein- und ausfahrbar im Inneren des zweiten Segments 34 aufgenommen ist. Die Trageinheit 30 umfasst weiterhin ein viertes Segment 38, dass ein- und ausfahrbar im Inneren des dritten Segments 36 aufgenommen ist. Eine solche teleskopartige Konstruktion bietet eine in der in Figur 1 dargestellten Transportstellung platzsparende Trageinheit 30, die dann, wie in Figur 3 dargestellt, auf das Vierfache verlängert werden kann. Die Trageinheit 30 trägt an einem Ende die Geräteanordnung 20 und ist an dem anderen, dazu entgegengesetzten Ende von dem Fußkörper 40 getragen. Der Fußkörper 40 ist also mit dem ersten Segment 32 der Trageinheit 30 verbunden und die Geräteanordnung 20 ist an dem vierten Segment 38 angebracht. Im ausgefahrenen Zustand und in der in Figur 4 dargestellten Funktionsstellung ist die Geräteanordnung 20 somit entfernt von dem Fußkörper 40 von dem Untergrund weit oben positioniert.

Der Fußkörper 40 weist einen Aufnahmeraum zur Aufnahme eines Beschwerungselements 44 auf, um einen sicheren Stand des mobilen Geräteträgers 10 auf dem Untergrund sicherzustellen.

Der mobile Geräteträger 10 ist vormontiert. Der mobile Geräteträger 10 umfasst sämtliche Bauteile und Einheiten, die für einen Betrieb des mobilen Geräteträgers 10 am Einsatzort nötig sind. Die Installation des mobilen Geräteträgers 10 kann also ohne ein Anbringen weiterer Bauteile lediglich durch Schwenk- und Ziehbewegungen erfolgen. Der mobile Geräteträger 10 wird in der Ausfahrstellung von einem eingefahrenen Zustand, wie in Figur 2 gezeigt, in einen ausgefahrenen Zustand, wie in Figur 3 gezeigt, ausgefahren. Anschließend wird er in die Funktionsstellung, wie in Figur 4 dargestellt, geschwenkt und ist einsatzbereit. Bei dem in den Figuren 1 bis 4 dargestellten mobilen Geräteträger 10 ist die Trageinheit 30 händisch aus- und einfahrbar. Der mobile Geräteträger 10 kann also durch einen Monteur aufgestellt werden.

Die Trageinheit 30 ist zwischen der in Figur 1 dargestellten Transportstellung zum Transportieren des mobilen Geräteträgers 10 und der in Figur 2 dargestellten Ausfahrstellung relativ zu dem Fußkörper 40 um die Schwenkachse S schwenkbar. Die Transportstellung ermöglicht im Vergleich zu der Ausfahrstellung einen einfacheren Transport. Die Trageinheit 10 erstreckt sich in der Transportstellung so in vertikaler Richtung, dass der mobile Geräteträger 10 problemlos auf einer Ladefläche eines Lastkraftwagens transportiert werden kann.

Der Fußkörper 40 weist eine Schwenkeinrichtung 50 zum Schwenken der Trageinheit 30 um die Schwenkachse S auf. Die Schwenkeinrichtung 50 umfasst einen ersten Tragrahmen 52, an dem die Trageinheit 30 befestigt ist, einen zweiten Tragrahmen 54, der an dem Fußkörper 40 befestigt ist, und eine Welle 56, die den ersten Tragrahmen 52 und den zweiten Tragrahmen 54 um die Schwenkachse S schwenkbar verbindet. Der erste Tragrahmen 52 und der zweite Tragrahmen 54 haben jeweils zwei Durchgangslöcher, durch die sich die Welle 56 erstreckt, um die Schwenkachse S zu definieren.

Der erste Tragrahmen 52 und der zweite Tragrahmen 54 sind durch eine quaderförmige Rahmenstruktur gebildet. Bei dem ersten Tragrahmen 52 sind Kanten der quaderförmigen Rahmenstruktur durch miteinander verbundene stabförmige Strukturelemente gebildet. Die Flächen der quaderförmigen Rahmenstruktur sind offen.

Die Trageinheit 30 ist durch ein erstes Befestigungsmittel 58 an dem ersten Tragrahmen 52 befestigt. Das Befestigungsmittel 58 umschließt die Trageinheit 30 an zwei voneinander beabstandeten Befestigungsstellen und ist mit dem ersten Tragrahmen 52 verschraubt. Dadurch können auf die Trageinheit 30 wirkende Kräfte von dem Tragrahmen 52 aufgenommen werden.

Die Trageinheit 30 ist in der in Figur 1 dargestellten Transportstellung und in der in Figur 4 dargestellten Funktionsstellung durch ein zweites Befestigungsmittel 60 lösbar an dem zweiten Tragrahmen 54 befestigt. Das zweite Befestigungsmittel 60 wird zur Arretierung der Trageinheit 30 in der Transportstellung und in der Funktionsstellung verwendet. Das zweite Befestigungsmittel 60 kann die Trageinheit 30 umschließen und ist mit dem zweiten Tragrahmen 54 verschraubt. Der zweite Tragrahmen 54 ist mit dem Fußkörper 40 an mehreren Befestigungsstellen verschraubt.

Der erste Tragrahmen 52 liegt in der in Figur 1 dargestellten Transportstellung und in der in Figur 4 dargestellten Funktionsstellung auf dem zweiten Tragrahmen 54 auf. Durch das Aufliegen des ersten Tragrahmens 52 auf dem zweiten Tragrahmen 54 können auf die Trageinheit wirkende Kräfte einfach von dem ersten Tragrahmen 52 aufgenommen und dem zweiten Tragrahmen 54 abgestützt werden. Zusätzlich liegt der erste Tragrahmen 52 in der in den Figuren 2 und 3 dargestellten Ausfahrstellung auf dem zweiten Tragrahmen 54 auf.

Der erste Tragrahmen 52 hat eine kleinere Abmessung als der zweite Tragrahmen 54 und ist teilweise innerhalb des zweiten Tragrahmens 54 angeordnet. Der zweite Tragrahmen 54 hat ein nach innen versetztes erstes Strukturelement 61, auf dem der erste Tragrahmen 52 in der Funktionsstellung und in der Transportstellung aufliegt. Zusätzlich hat der zweite Tragrahmen 54 ein nach innen versetztes zweites Strukturelement 62, auf dem der erste Tragrahmen 52 in der in Figur 2 und in Figur 3 dargestellten Ausfahrstellung aufliegt.

Der erste Tragrahmen 52 hat ein Verbindungselement 68 zum Heben des mobilen Geräteträgers 10 in der in Figur 1 dargestellten Transportstellung. Das Verbindungselement 68 ermöglicht ein Anheben des mobilen Geräteträgers 10 mit einem Kran. Der mobile Geräteträger 10 ist also kranbar und das Verbindungselement 68 ist als Transportöse bzw. Kranöse ausgebildet.

Der mobile Geräteträger 10 umfasst ein Energiegewinnungsmodul 70. Das Energiegewinnungsmodul 70 versorgt die Geräteanordnung 20 mit Energie. Der mobile Geräteträger 10 kann somit autark betrieben werden. Das Energiegewinnungsmodul 70 ist als Solarmodul ausgeführt und an dem ersten Segment 32 der Trageinheit 30 angeordnet. Der mobile Geräteträger weist ferner einen Energiespeicher 80 auf. Der Energiespeicher 80 umfasst eine Batterie 82 und Steuerkomponenten 84. Der Energiespeicher 80 ist teilweise innerhalb des zweiten Tragrahmens 54 angeordnet. Die Steuerkomponenten 84 sind innerhalb eines Gehäuses 86 angeordnet, das an dem zweiten Tragrahmen 54 angeordnet ist. Der Energiespeicher 80 kann der Geräteanordnung 20 Energie zur Verfügung stellen und die von dem Energiegewinnungsmodul 70 gewonnene Energie zwischenspeichern, bevor diese von der Geräteanordnung 20 benötigt wird.

Die Trageinheit 30 hat einen Hohlraum entlang ihrer Längsachse L zur Aufnahme einer in den Figuren nicht dargestellten Verkabelung der Geräteanordnung 20. Die Verkabelung umfasst ein Stromkabel, das mit dem Energiegewinnungsmodul 70 und dem Energiespeicher 80 verbunden ist, und ein Datenkabel, das mit einer Steuereinrichtung 90 des mobilen Geräteträgers 10 verbunden ist. Damit ist der mobile Geräteträger 10 betriebsbereit, sobald die Trageinheit 30 in die in Figur 4 dargestellte Funktionsstellung gebracht ist. Der Hohlraum der Trageinheit 30 wird dabei durch jedes der Segmente 32, 34, 36, 38 gebildet und schützt die Verkabelung durch äußere Einflüsse.

Die Steuereinrichtung 90 umfasst eine Kommunikationseinheit, die mit einer externen Einrichtung kommunizieren kann. Über die Kommunikationseinheit können Informationen, die von der Geräteanordnung 20 erfasst werden, an externe Einrichtungen übermittelt werden. Zusätzlich kann die Steuereinheit 90 die Geräteanordnung 20 basierend auf Steuerbefehlen, die die Kommunikationseinheit von einer externen Einrichtung empfängt, steuern. Die Steuereinrichtung 90 ist vorliegend zusammen mit der Steuerkomponente 84 des Energiespeichers 80 in dem Gehäuse 86 angeordnet.

Der mobile Geräteträger 10 ermöglicht durch das Verschwenken zwischen der in den Figuren 2 und 3 dargestellten Ausfahrstellung und der in Figur 4 dargestellten Funktionsstellung eine einfache Installation an einem Einsatzort. In der in den Figuren 2 und 3 dargestellten Ausfahrstellung kann die Trageinheit 30 schnell und einfach ausgezogen und bei Abbau auch wieder eingezogen werden. Im ausgefahrenen Zustand kann die Trageinheit 30 anschließend in die in Figur 4 dargestellte Funktionsstellung geschwenkt werden. Wie in den Figuren 1 bis 4 dargestellt kann die Trageinheit 30 in der Ausfahrstellung horizontal ausgefahren und anschließend in die Funktionsstellung geschwenkt werden, in der sich die Trageinheit 30 mit ihrer Längsachse L vertikal erstreckt, um die Geräteanordnung 20 in die erhöhte Position zu bringen. Insgesamt kann der mobile Geräteträger 10 im eingefahrenen Zustand der Trageinheit 30 als kompakte Einheit transportiert und an dem Einsatzort mit wenig Zeit- und Personalaufwand installiert werden.

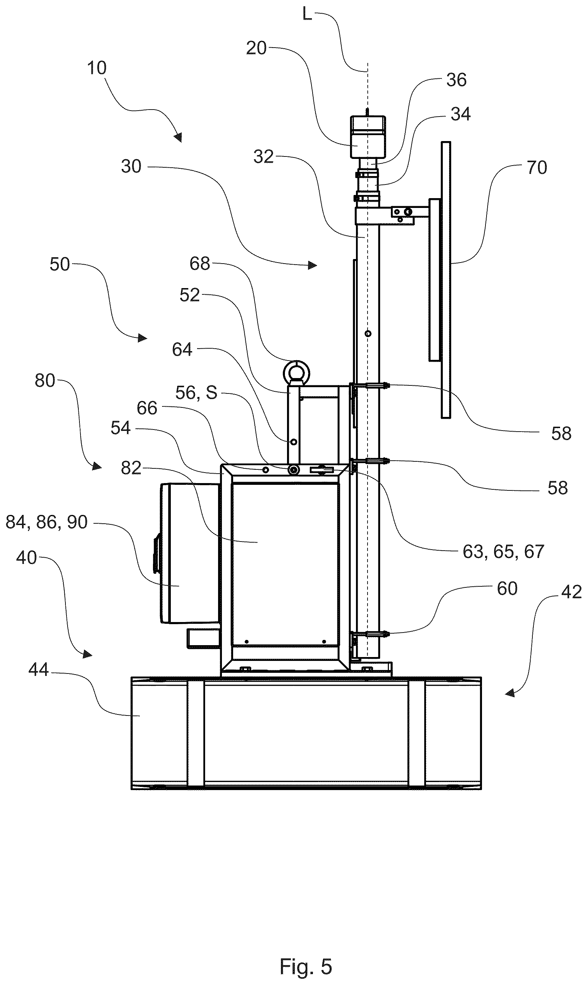

Die Schwenkeinrichtung 50 ist dazu ausgebildet, die Trageinheit 30 in der in Figur 1 dargestellten Transportstellung und in der in Figur 4 dargestellten Funktionsstellung zu arretieren. Dies wird nachfolgend anhand der Figuren 5 bis 8 näher erläutert.

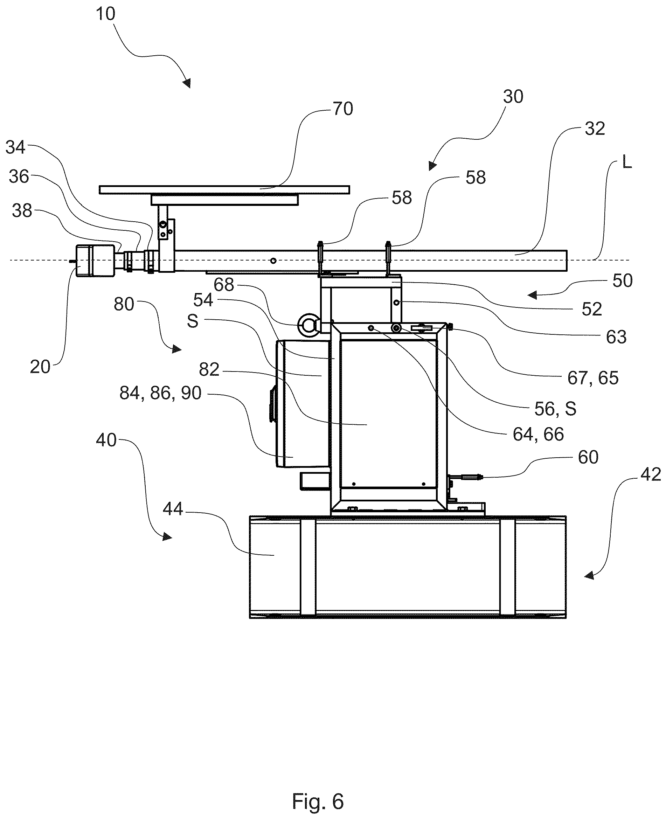

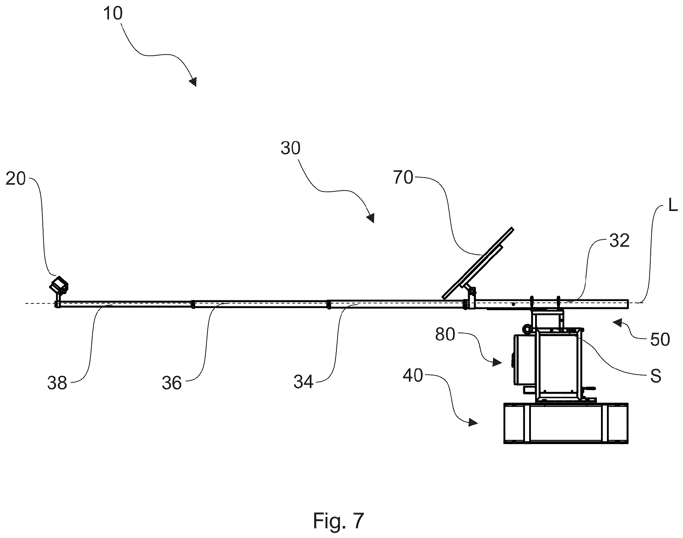

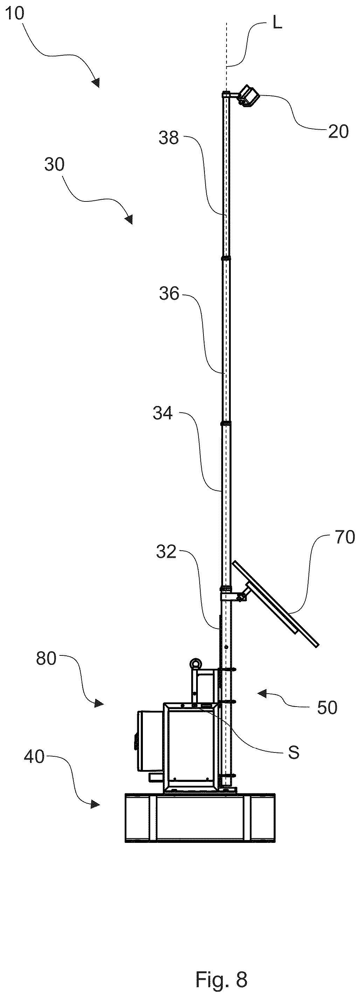

Die Figuren 5 bis 8 zeigen Seitenansichten des erfindungsgemäßen mobilen Geräteträgers 10 in den anhand der Figuren 1 bis 4 beschriebenen unterschiedlichen Aufbaustadien. Figur 5 zeigt eine Seitenansicht des mobilen Geräteträgers 1 mit der Trageinheit 30 in der Transportstellung. Figur 6 zeigt eine Seitenansicht des mobilen Geräteträgers 10 mit der Trageinheit 30 in der Ausfahrstellung in dem eingefahrenen Zustand. Figur 7 zeigt eine Seitenansicht des mobilen Geräteträgers 10 mit der Trageinheit 30 in der Ausfahrstellung in dem ausgefahrenen Zustand. Figur 8 zeigt eine Seitenansicht des mobilen Geräteträgers 10 mit der Trageinheit 30 in der Funktionsstellung.

Die Schwenkeinrichtung 50 arretiert die Trageinheit 30 in der in den Figuren 1 und 5 dargestellten Transportstellung und der in den Figuren 4 und 8 dargestellten Funktionsstellung durch das zweite Befestigungsmittel 60. Zusätzlich zur Arretierung mit dem zweiten Befestigungsmittel 60 arretiert die Schwenkeinrichtung 50 die Trageinheit 30 durch weitere Mittel. Der erste Tragrahmen 52 hat ein erstes Arretierloch 63 und ein zweites Arretierloch 64. Der zweite Tragrahmen 54 hat ein drittes Arretierloch 65 und ein viertes Arretierloch 66. Die Arretierlöcher 63,64, 65,66 erstrecken sich parallel zur Welle 56 und somit auch parallel zur durch die Welle 56 definierten Schwenkachse S. Durch das erste Arretierloch 63 des ersten Tragrahmens 52 und das dritte Arretierloch 65 des zweiten Tragrahmens 54 ist ein Arretierbolzen 67 zur Arretierung der Trageinheit 30 in der in den Figuren 1 und 5 dargestellten Transportstellung und in der in den Figuren 4 und 8 dargestellten Funktionsstellung eingeführt. In der in den Figuren 2, 3, 6 und 7 dargestellten Ausfahrstellung ist der Arretierbolzen 67 durch das dritte Arretierloch 65 des zweiten Tragrahmens 54 eingeführt, allerdings nicht durch das erste Arretierloch 63 des ersten Tragrahmens 52. Der Arretierbolzen 67 hat einen Griff zum händischen Ein- und Ausführen.

Anders als in den Figuren 2, 3, 6 und 7 dargestellt, kann der Arretierbolzen 67 in der Ausfahrstellung in das zweite Arretierloch 64 des ersten Tragrahmens 52 und in das vierte Arretierloch 66 des zweiten Tragrahmens 54 eingeführt werden, um die Trageinheit 30 in der Ausfahrstellung zu arretieren.

Die Figuren 1 und 5 zeigen den mobilen Geräteträger 10 in der Transportstellung, in der die Längsachse L der Trageinheit 30 im Wesentlichen vertikal verläuft. Aus der Transportstellung kann die Trageinheit 30 mittels der Schwenkeinheit 50 um die Schwenkachse S in die im wesentlichen horizontale Ausfahrstellung verschwenkt werden. Die Schwenkbewegung um die Schwenkachse S aus der Transportstellung in die Ausfahrstellung kann beispielsweise um einen Winkel von 90° erfolgen.

In der Ausfahrstellung verläuft die Längsachse L der Trageinheit im wesentlichen horizontal. Die Ausfahrstellung der Transporteinheit 30 ist in den Figuren 2 und 6 gezeigt, wobei die Transporteinheit 30 in den Figuren 2 und 6 im eingezogenen bzw. eingefahrenen Zustand gezeigt ist. In der in den Figuren 2 und 6 gezeigten Ausfahrstellung kann die Trageinheit 30 schnell und einfach ausgezogen und in den in den Figuren 3 und 7 gezeigten ausgefahrenen Zustand gebracht werden. Die Figuren 3 und 7 zeigen dementsprechend die Trageinheit 30 in der Ausfahrstellung im ausgefahrenen Zustand. In der Ausfahrstellung kann auch das Energiegewinnungsmodul 70 in die für die Energiegewinnung gewünschte Position gebracht werden.

Die ausgefahrene Trageinheit 30 kann in dem in den Figuren 3 und 7 gezeigten Zustand aus der Ausfahrstellung mittels der Schwenkeinheit 50 um die Schwenkachse S in die Funktionsstellung geschwenkt werden. Die Funktionsstellung ist in den Figuren 4 und 8 gezeigt. Die Schwenkbewegung um die Schwenkachse S in die Funktionsstellung kann beispielsweise um einen Winkel von 90° erfolgen. In der Funktionsstellung verläuft die Längsachse L der Trageinheit 30 im Wesentlichen vertikal.

### Bezugszeichenliste

- 10: mobiler Geräteträger
- 20: Geräteanordnung
- 30: Trageinheit
- 32: erstes Segment
- 34: zweites Segment
- 36: drittes Segment
- 38: viertes Segment
- 40: Fußkörper
- 42: Aufnahmeraum
- 44: Beschwerungselement
- 50: Schwenkeinrichtung
- 52: erster Tragrahmen
- 54: zweiter Tragrahmen
- 56: Welle
- 58: erstes Befestigungsmittel
- 60: zweites Befestigungsmittel
- 61: erstes Strukturelement
- 62: zweites Strukturelement
- 63: erstes Arretierloch
- 64: zweites Arretierloch
- 65: drittes Arretierloch
- 66: viertes Arretierloch
- 67: Arretierbolzen
- 68: Verbindungselement
- 70: Energiegewinnungsmodul
- 80: Energiespeicher
- 82: Batterie
- 84: Steuerkomponente
- 86: Gehäuse
- 90: Steuereinrichtung
- S: Schwenkachse
- L: Längsachse der Trageinheit

## Patentansprüche

1. Mobiler Geräteträger (10) zum Positionieren und Tragen einer Einrichtung, insbesondere einer Geräteanordnung (20) zur Erfassung von Verkehrsinformationen an Verkehrswegen, aufweisend:
eine Trageinheit (30), die ein- und ausfahrbar ist, wobei die Trageinheit (30) dazu eingerichtet ist, eine Einrichtung zu tragen, und
einen Fußkörper (40) zum Aufstellen des mobilen Geräteträgers (10) auf einem Untergrund,
wobei die Trageinheit (30) schwenkbar mit dem Fußkörper (40) verbunden ist, und
wobei die Trageinheit (30) zumindest zwischen einer im Wesentlichen horizontalen Ausfahrstellung zum Ausfahren der Trageinheit (30) und einer vertikalen Funktionsstellung relativ zu dem Fußkörper (40) um eine Schwenkachse (S) schwenkbar ist, die schräg oder quer zu der Längsachse (L) der Trageinheit (30) verläuft.

2. Mobiler Geräteträger (10) nach Anspruch 1, wobei die Trageinheit (30) zwischen einer Transportstellung zum Transportieren des mobilen Geräteträgers (10) und der Ausfahrstellung relativ zu dem Fußkörper (40) um die Schwenkachse (S) schwenkbar ist.

3. Mobiler Geräteträger (10) nach Anspruch 1 oder 2, wobei der Fußkörper (40) eine Schwenkeinrichtung (50) zum Schwenken der Trageinheit (30) um die Schwenkachse (S) aufweist, wobei die Schwenkeinrichtung (50) dazu ausgebildet ist, die Trageinheit (30) in der Transportstellung und in der Funktionsstellung zu arretieren.

4. Mobiler Geräteträger (10) nach Anspruch 3, wobei die Schwenkeinrichtung aufweist:
einen ersten Tragrahmen (52), an dem die Trageinheit (30) befestigt ist,
einen zweiten Tragrahmen (54), der an dem Fußkörper (40) befestigt ist, und
eine Welle (56), die den ersten Tragrahmen (52) und den zweiten Tragrahmen (54) um die Schwenkachse (S) schwenkbar verbindet.

5. Mobiler Geräteträger (10) nach Anspruch 4, wobei der erste Tragrahmen (52) in der Transportstellung und in der Funktionsstellung auf dem zweiten Tragrahmen (54) aufliegt.

6. Mobiler Geräteträger (10) nach Anspruch 4 oder 5, wobei der erste Tragrahmen (52) in der Ausfahrstellung auf dem zweiten Tragrahmen (54) aufliegt.

7. Mobiler Geräteträger (10) nach einem der Ansprüche 4 bis 6, wobei der erste Tragrahmen (52) ein Verbindungselement (60) zum Heben des mobilen Geräteträgers (10) in der Transportstellung aufweist.

8. Mobiler Geräteträger (10) nach einem der vorhergehenden Ansprüche, wobei der Fußkörper (40) einen Aufnahmeraum (42) zur Aufnahme eines Beschwerungselements (44) aufweist.

9. Mobiler Geräteträger (10) nach Anspruch 8, wobei in dem Aufnahmeraum (42) ein Beschwerungselement (44) angeordnet ist.

10. Mobiler Geräteträger (10) nach einem der vorhergehenden Ansprüche, wobei der mobile Geräteträger (10) ein Energiegewinnungsmodul (70) aufweist.

11. Mobiler Geräteträger (10) nach Anspruch 10, wobei das Energiegewinnungsmodul (70) an der Trageinheit angeordnet ist und relativ zur Trageinheit (30) ausrichtbar ist.

12. Mobiler Geräteträger (10) nach einem der vorhergehenden Ansprüche, wobei der mobile Geräteträger (10) einen Energiespeicher (80) aufweist.

13. Mobiler Geräteträger (10) nach einem der vorhergehenden Ansprüche, wobei die Trageinheit (30) einen Hohlraum entlang ihrer Längsachse (L) zur Aufnahme einer Verkabelung der Einrichtung aufweist.

14. Mobiler Geräteträger (10) nach einem der vorhergehenden Ansprüche, wobei der mobile Geräteträger (10) die Geräteanordnung (20) umfasst, die Geräteanordnung (20) dazu eingerichtet ist, Verkehrsinformationen zu erfassen, und die Trageinheit (30) die Geräteanordnung (20) trägt.

15. Montageverfahren für einen mobilen Geräteträger (10) nach einem der vorhergehenden Ansprüche, umfassend:
Ausfahren der Trageinheit (30) in der im Wesentlichen horizontalen Ausfahrstellung, und
Schwenken der Trageinheit (30) um die Schwenkachse (S) in die vertikale Funktionsstellung.
